Europäisches Patentamt

European Patent Office

Office européen des brevets

(19)

(11) **EP 1 119 763 B1**

(12) **EUROPEAN PATENT SPECIFICATION**

(45) Date of publication and mention
of the grant of the patent:
**28.12.2005 Bulletin 2005/52**

(51) Int Cl.⁷: **G01N 21/49**

(21) Application number: **99945835.9**

(22) Date of filing: **07.10.1999**

(86) International application number:
**PCT/CH1999/000476**

(87) International publication number:
**WO 2000/020843 (13.04.2000 Gazette 2000/15)**

(54) **METHOD FOR MEASURING LOCALLY AND SUPERFICIALLY THE SCATTERING AND ABSORPTION PROPERTIES OF TURBID MEDIA**

VERFAHREN ZUM ÖRTLICHEN UND OBERFLÄCHIGEN MESSEN DER STREU- UND ABSORPTIONSEIGENSCHAFTEN VON TRÜBEN MEDIEN

PROCEDE POUR MESURER LOCALEMENT ET EN SURFACE LES PROPRIETES DE DISPERSION ET D'ABSORPTION DE MILIEUX TROUBLES

(84) Designated Contracting States:
**AT BE CH CY DE DK ES FI FR GB GR IE IT LI LU MC NL PT SE**

(30) Priority: **07.10.1998 US 103559 P**

(43) Date of publication of application:
**01.08.2001 Bulletin 2001/31**

(73) Proprietor: **ECOLE POLYTECHNIQUE FEDERALE DE LAUSANNE (EPFL)**
**1015 Lausanne (CH)**

(72) Inventors:
• **BEVILACQUA, Frédéric**
  **Ecublens CH-1015 Lausanne (CH)**
• **DEPEURSINGE, Christian**
  **Ecublens CH-1015 Lausanne (CH)**

(74) Representative: **Besse, François**
**ANDRE ROLAND S.A.**
**Avenue Tissot 15**
**P.O. Box 1255**
**1001 Lausanne (CH)**

(56) References cited:
**US-A- 5 452 723**

• **F. BEVILACQUA ET AL: "In vivo local determination of tissue optical properties" SPIE, EUROPEAN BIOMEDICAL OPTICS, BIOS EUROPE 97, vol. 3194, 1997, pages 262-268, XP000866481**
• **P. MARQUET ET AL: "DETERMINATION OF REDUCED SCATTERING AND ABSORPTION COEFFICIENTS BY A SINGLE CHARGE-COUPLED-DEVICE ARRAY MEASUREMENT, PART I: comparison between experiments and simulations" OPTICAL ENGINEERING, vol. 34, no. 7, July 1995 (1995-07), pages 2055-2063, XP002129315**
• **D.R. WYMAN ET AL: "Similarity relations for the interaction parameters in radiation transport" APPLIED OPTICS, vol. 28, no. 24, 15 December 1989 (1989-12-15), pages 5243-5429, XP000086704**

**Description**

1. Field of the invention

The present invention relates to a method of quantifying the optical scattering and absorption properties of turbid media. More precisely the present invention relates to a non-invasive measurement, over a small area of the sample surface. Local and superficial characterization of biological tissues in vivo is a major application of this invention.

2. Related Background Art.

Different techniques have already been proposed to quantitatively determine the absorption and reduced scattering coefficients of turbid media[1]. Most of the non-invasive methods are based on the measurement of spatially and/or temporally-resolved reflectance. The principle is as follows: the turbid medium is illuminated by a collimated or focused light source. The backscattered light is measured by one or several detectors. Different types of measurements are possible, depending on the time-dependence of the illuminating source: steady-state (continuous source), time-domain (short pulsed source) or frequency domain (amplitude modulated source). The present invention relates to the case of steady-state measurements, performed at different distances $\rho$ between the source and the detectors. However, the technique presented here can be complemented by time- or frequency-domain measurements.

The range of $\rho$ values is an important point to consider, when comparing different methods based on the measurement of the reflectance. First, the probed volume of the turbid medium is related to the source-detector separation $\rho$. The larger the source-detector separation, the deeper the average depth probed. Second, depending on the range of $\rho$, different mathematical processing must be used to obtain the optical properties from the raw data.

At least two cases must be distinguished.

1) The first case corresponds to source-detector separations larger than several transport mean free paths. For typical biological tissue optical properties[2], this case correspond to a source-detector separation larger than 2 mm. An analytical form of the reflectance can be obtained from the diffusion equation, if the absorption coefficient $\mu_a$ is sufficiently lower than the scattering coefficient $\mu_s$ (typically ten times). In such a case, the relevant optical properties are the refractive index, the absorption coefficient and the reduced scattering coefficient. The average depth of probing is on the same order than the source-detector separation $\rho$.

   Such methods have been already published, and are the object of patents (Ref., Patent 5,517,987 Tsuchiya, Patent 5,676,142 Miwa et al.).

2) The second case corresponds to source-detector separations close to one transport mean free path. For biological tissues[2], such source-detector separations correspond typically to distances from 0.1 to 2 mm. The average depth probed is on the order of 1 mm. Such small source-detector separations enable the measurement of the optical properties of a small tissue volume.

Wang et al. (Patent 5,630,423) proposed a method for the determination of the reduced scattering coefficient only, using an optical beam of oblique incidence. Moreover, their analysis does not include the effect of the phase function. Kessler et al. (Patents 5,284,137 and 5,645,061) proposed a method for measuring the local dye concentration and scattering parameters in animal and human tissues, based on spatial and spectral measurements. However, their methods do not enable the simultaneous determination of the absorption coefficient, reduced scattering coefficient. Other publications may be of concern.

3. Summary of the Invention:

In the case of source-detector separations close to one transport mean free path, light propagation has been modeled using Monte Carlo simulations. In contrast to the previous case where the source-detector separation is larger than several transport mean free paths, it was discovered by the inventors that not only the first moment of the phase function must be considered, but also the second moment. More precisely, the relevant optical properties are the refractive index, the absorption, the reduced scattering coefficient and a new parameter $\gamma=(1-g_2)/(1-g_1)$, that takes into account the first two moments of the phase function, denoted $g_1$ and $g_2$ respectively.

Different.methods have been proposed for local characterization of turbid media, and in particular of biological tissues. Nevertheless none allows for the simultaneous determination of the absorption, the reduced scattering coefficient and the parameter $\gamma$.

1. See "Welch, A. J.; van Gemert, M. J. C. Optical Thermal Response of Laser Irradiated Tissue; Plenum publishing Corp., New York, 1995", and references therein.
2. W.-F. Cheong, S.A. Prahl, and A.J. Welch, "A Review of the Optical Properties of Biological Tissues," IEEE J. Quantum Electron. 26,2166-2185 (1990).

In the present invention we present a method for the measurement of the absorption coefficient, the reduced scattering coefficient and the said phase function parameter $\gamma$, from the spatially-resolved reflectance data at short source detector separation. These three parameters, which can be measured at different wavelengths, enable us to characterize turbid media, such as biological tissues. Our method is based on a theoretical study of the reflectance at short source-detector separations, that we performed with Monte Carlo simulations.

BRIEF DESCRIPTION OF THE DRAWINGS

Fig.1. Description of the principle of spatially-resolved reflectance measurement. $\rho$ denotes the source - detector distance, $\omega_{source}$ and $\omega_{detector}$ are the solid angles of light acceptance determined by the Numerical Apertures (N. A.) of the optical fibers

Fig.2 Probability density function of the mean depth of scattering events per detected photons.

Fig.3. Examples of spatially resolved reflectance curves obtained with different phase functions. Case of matched refractive index (n=1.0).

Fig.4. Monte Carlo simulations and fits of the spatially resolved reflectance curves by mathematical expression in the form $R(\rho) \cong [A(\rho,\mu'_s,\gamma) + \mu'_s B(\mu_a)]^2$ . Case of constant $\gamma$=1.9 and $\mu_s$'= 1 mm$^{-1}$, numerical aperture of the source and detectors = 0.37. A = 0.0647$\rho^{0.324}$ exp(-0.161$\rho$), B = 0.18653 $\mu_a$- 0.8466 $\mu_a^2$ + 1.836$\mu_a^3$

Fig.5.a. Basic description of apparatus suitable for performing the method of the invention. Case of measurements with an optical fiber probe. The apparatus comprises a probe connected to a light source unit and a detection unit, both units being connected to a computer or signal processing unit. The optical fiber probe is constituted of one or more illuminating fibers, and one or more collecting fibers.

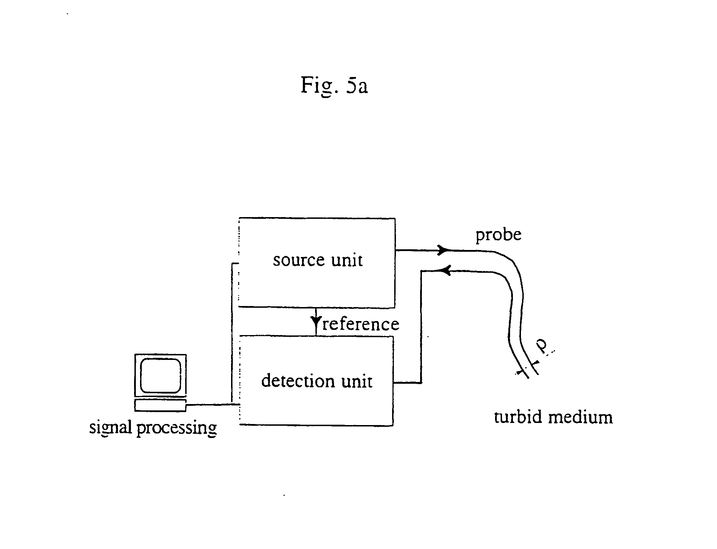

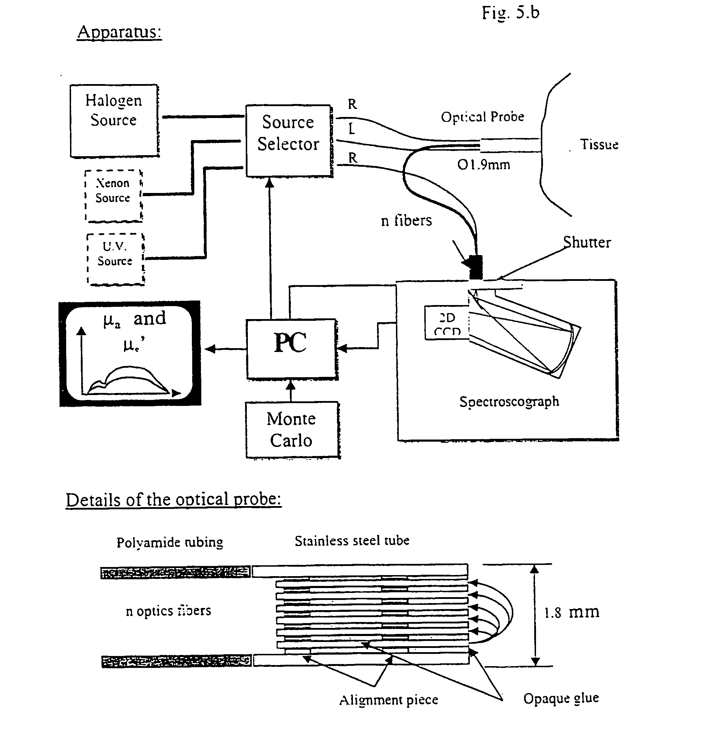

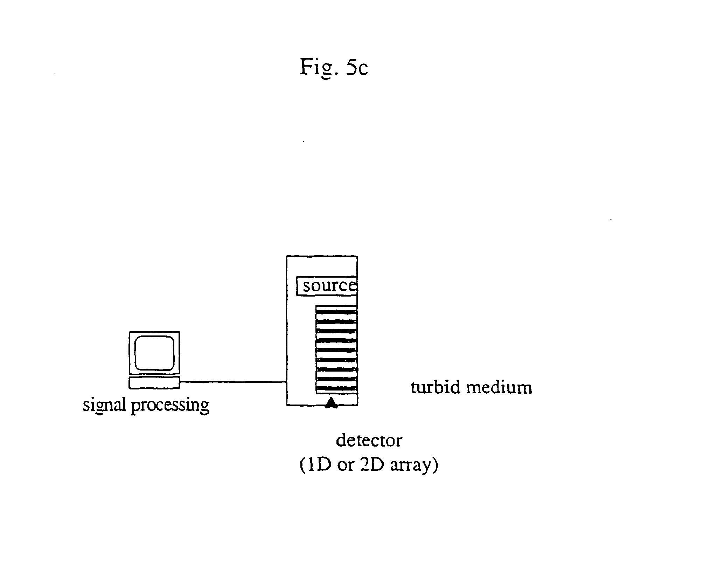

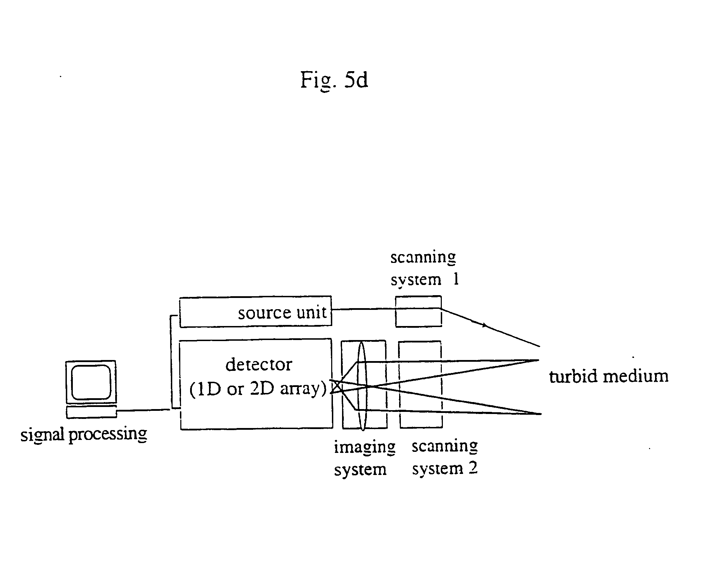

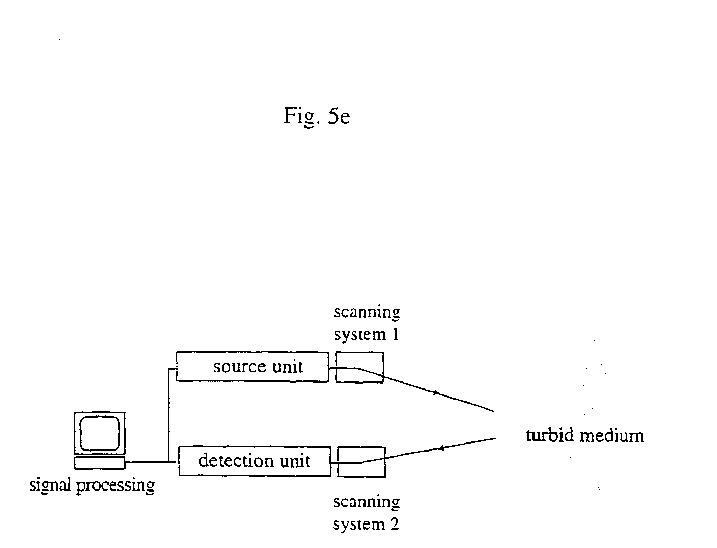

Fig.5.b.Basic description of apparatus suitable for performing the method of the invention. Particular embodiment where the probe is composed of n detecting fibers (typically 6). A broadband or white light source is used for excitation and the retro-diffused light is collected by the n detecting fibers in parallel and dispersed in parallel in a spectrograph, before being detected on a 2D CCD camera and transmitted numerically to a PC for $\gamma$, $\mu'_s$, $\mu_a$ de-termination at each wavelength $\lambda$.

Fig.5.c. Basic description of apparatus suitable for performing the method of the invention. Case of a measurement with sources and detectors directly in contact with the turbid medium.

Fig.5.d. Basic description of apparatus suitable for performing the method of the invention. Case of non-contact measurements with a 1D or 2D detector, coupled with an imaging device. Scanning systems 1 and 2 are optional, they may be distinct from one another or confounded in a single scanner.

Fig.5.e. Basic description of apparatus suitable for performing the method of the invention. Case of non-contact measurements with source and detection beams deflected by one or two scanning devices which may be distinct from one another or confounded.

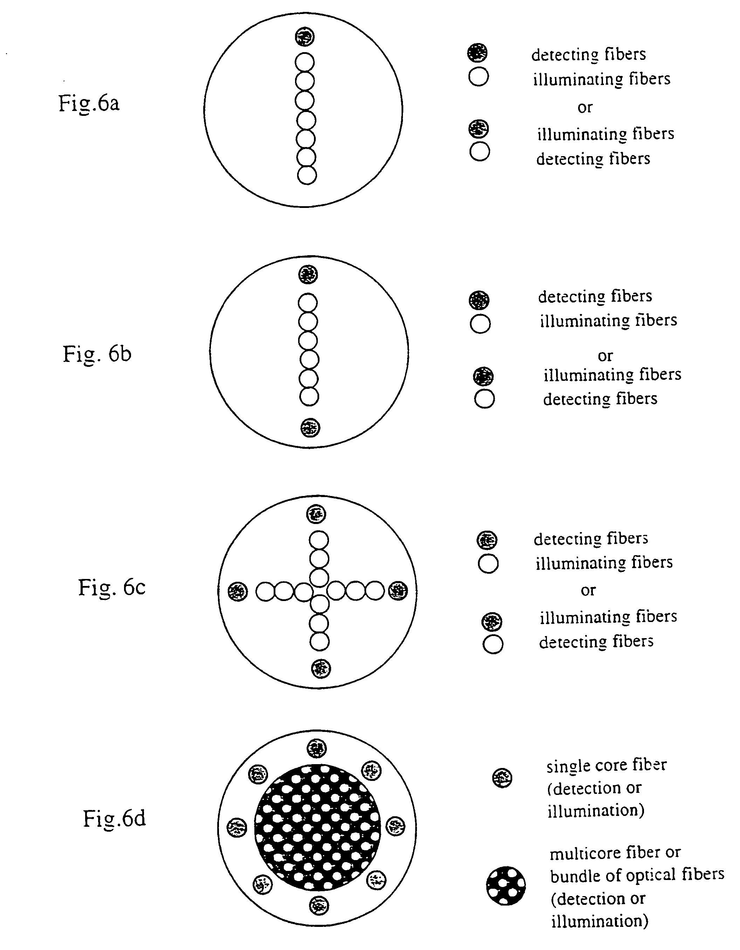

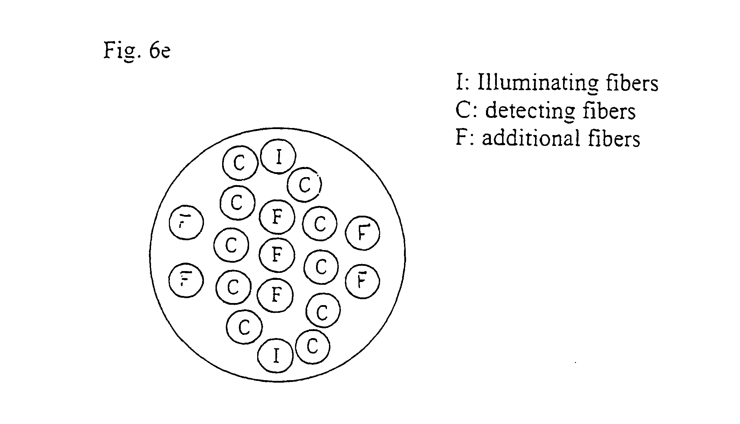

Fig.6. Examples of the sample side of the fiber optical probe.

6a. Simple arrangement for a single measurement.
6b. Arrangement for symmetrical measurements.
6c. Arrangement for multiple measurements.
6d. Arrangement for multiple measurements, using an multicore fiber, or an optical fiber bundle.
6e. Arrangement for symmetrical measurements where detecting fibers are arranged on an elliptic path so as giving a regular spacing from the illuminating fibers to the detecting fibers, while maximizing the collecting surface of the fibers. Additional fibers F can be put in the center of the probe or around the probe for other light channels: collecting fibers for fluorescence or Raman scattering for example.

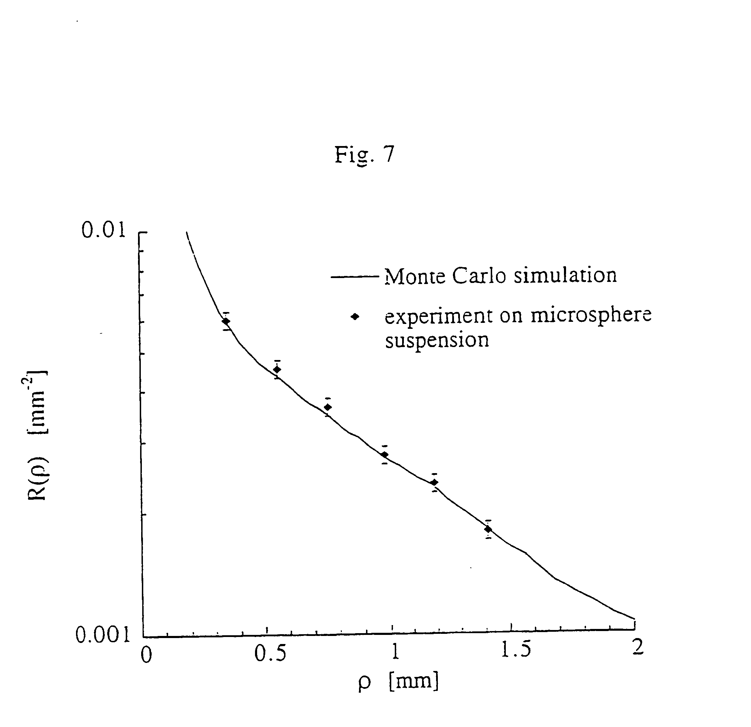

Fig.7. Example of a measurement of the spatially-resolved reflectance with the probe shown in Fig.6.a. The measurement, performed on a microsphere suspension, is superimposed to a Monte Carlo simulation. The optical properties, computed from published water optical properties ($\mu_a$) and Mie theory ($\mu_s'$, $\gamma$) are: $n$=1.33, $\mu_a$=0.0004 mm$^{-1}$, $\mu_s'$=1.0 mm$^{-1}$, $\gamma$=2.2. The calibration was performed with a siloxane sample of known optical properties.

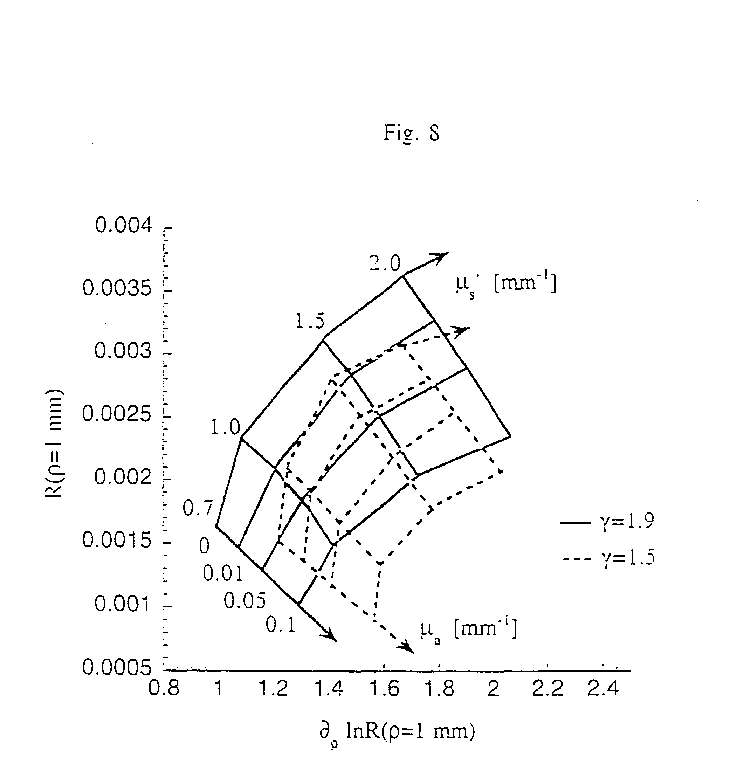

Fig.8. Relation between the parameters $R(\rho = 1\ mm)$ and $|\partial\ \rho lnR(\rho=1\ mm)|$ and the optical coefficients $\mu_s'$ and $\mu_a$. Case of $\gamma$ =1.5 and 1.9. Probe of refractive index = 1.5, sample of refractive index = 1.4, optical fibers diameter = 200 $\mu$m, NA=0.37 (source and collection).

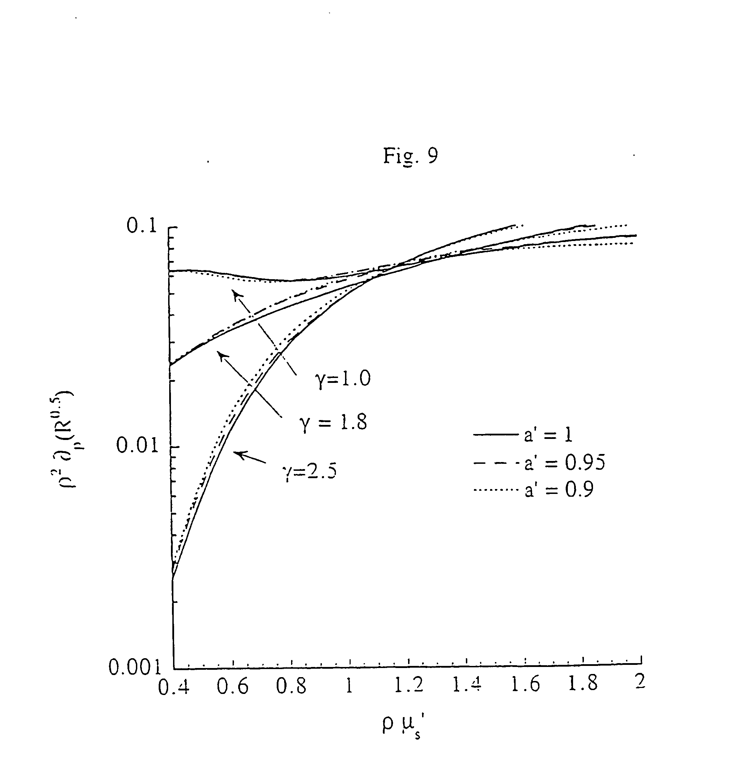

Fig.9. Plot of the parameter $\frac{\partial}{\partial \rho}\sqrt{R}$ for different $\gamma$ values (1.0, 1.8, 2.5), different reduced albedo a' (1, 0.95, 0.9) and for fixed $\rho$ =1 mm. Mismatched refractive index n=1.4.

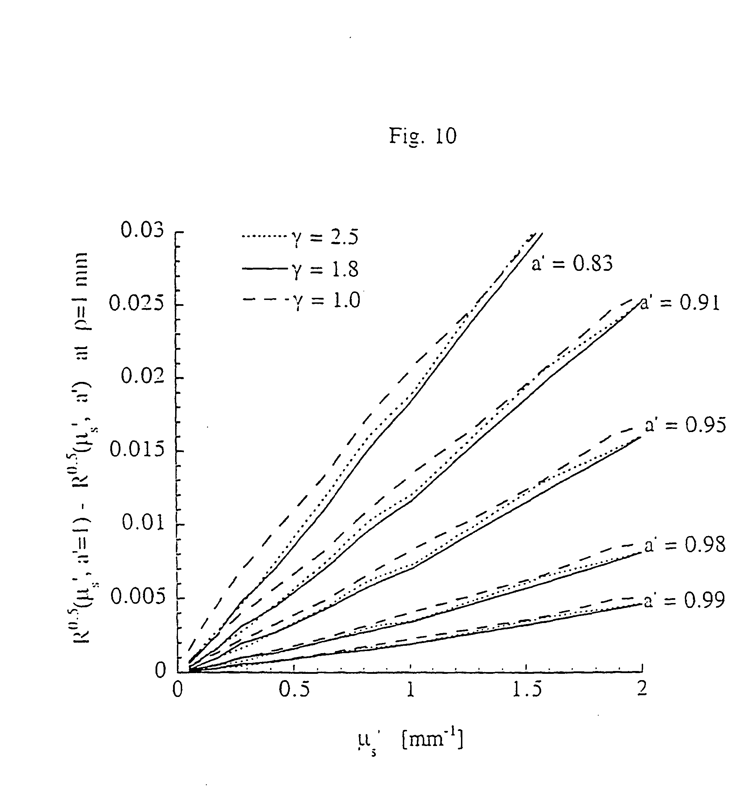

Fig.10. Plot of $\sqrt{R}$ (a'= 1) - $\sqrt{R}$(a') for different $\gamma$ values and reduced albedo a', and for fixed $\rho$ =1 mm. Mismatched refractive index n=1.4.

## DETAILED DESCRIPTION OF THE INVENTION

### 1. Definitions

The present definitions are given for clarity of the concepts developed in the patent and are worded in agreement with ref. 1.

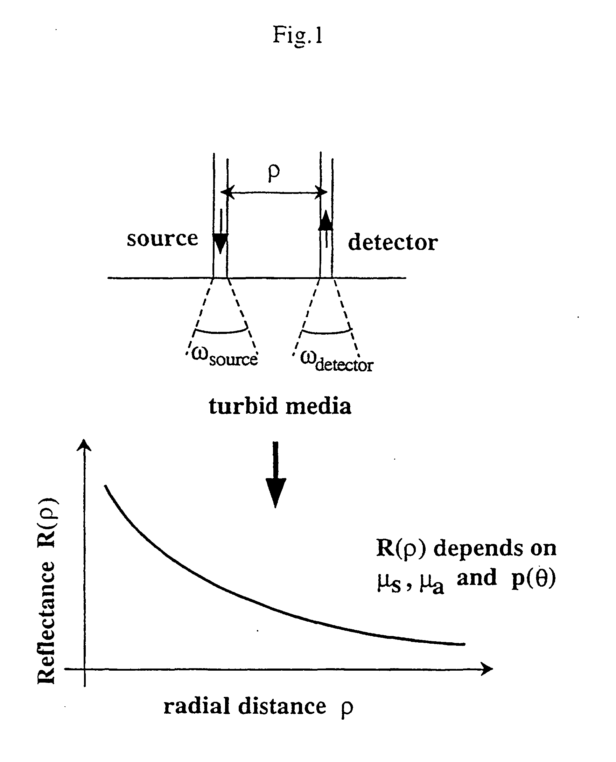

The concept of spatially resolved reflectance is illustrated in Fig.1. Consider a collimated light beam impinging on a turbid medium (through air or through a light guide), in a given solid angle $\omega_{source}$ determined by the Numerical Aperture of the illuminating fiber: N.A. which is defined as the half angle of the entrance angle in the fiber, and on a limited area $A_{source}$, where the source irradiate the surface. The spatially resolved reflectance $R(\rho)$ is defined by the backscattered light power in a given solid angle $\omega_{detector}$, at a distance $\rho$ from the source, per unit area and normalized by the source power. The collecting area of the detector or detecting fiber is $A_{detector}$. The distance $\rho$ is referred as the source-detector separation (also in the case when light guides or imaging devices are used for the illumination and for the collection of the backscattered light).

$R(\rho)$ depends on the optical properties of the turbid medium, defined below. Note that $R(\rho)$ depends also on the source and detectors characteristics, i.e. numerical aperture and sizes.

It is commonly admitted that the fundamental optical properties of a turbid medium is determined by the average index of refraction n of the medium, the absorption coefficient $\mu_a$, the scattering coefficient $\mu_s$, and the phase function $p(\theta)$ where $\theta$ is the scattering angle. The absorption coefficient $\mu_a$ [mm$^{-1}$] is defined as the probability of absorption per unit infinitesimal pathlength. The scattering coefficient $\mu_s$ [mm$^{-1}$] is the scattering probability per unit infinitesimal pathlength. The phase function $p(\theta)$ is the density probability function for the scattering angle $\theta$. The phase function is normalized as follows:

$$1 = 2\pi \int_0^\pi p(\theta)\sin\theta d\theta \qquad (1.1)$$

In turbid media and in biological tissues in particular, the phase function $p(\theta)$ is a continuous function of the scattering angle $\theta$. It can be approximated by a development in Legendre polynomials:

$$p(\theta) = \frac{1}{4\pi}\sum_{n=0}^{\infty}(2n+1)g_n P_n(\cos\theta) \qquad (1.2)$$

Where $g_n$ is the n$^{th}$ order moment of the phase function and $P_n(\theta)$ is the Legendre polynomial of order n :

$$g_n = 2\pi \int_0^\pi P_n(\theta)p(\theta)\sin\theta d\theta \qquad (1.3)$$

The first moment of the phase function is also called the anisotropy factor, and is often simply noted $g$ $(=g_1)$. It represents the mean cosine of the scattering angle. The reduced scattering coefficient $\mu_s'$ is defined as:

$$\mu_s' = \mu_s(1-g_1) \qquad (1.4)$$

The transport mean free path (or reduced mean free path) mfp' of the photons, in a turbid medium, is defined as:

$$mfp' = (\mu_s'+\mu_a)^{-1} \qquad (1.5)$$

The reduced albedo $a'$ is the ratio:

$$a' = \mu'_s/(\mu_s'+\mu_a) \qquad (1.6)$$

As a result of the present invention described in more details in the next section, it is also necessary to define another phase function parameter called $\gamma$:

$$\gamma = (1-g_2)/(1-g_1) \qquad (1.7)$$

All the parameters listed above are referred as optical properties. They are wavelength dependent, and can vary in space and time. In the following, $\gamma$, $g_1$ and $g_2$ will, be considered as parameters characterizing the turbid medium.

### 2 Reflectance measurements at distances close to one transport mean free path

The methods described in the Patent 5,517,987 (Tsuchiya) are based on measurements with large range of source-detector separations, typically from 1 mfp' to 10 mfp'. In such cases, the volume probed is on the order of 10-1000 (mfp')$^3$. In contrast with such a large scale investigation, the present invention is directed to a novel approach where the volume probed is much smaller, on the order of 1 (mfp')$^3$. This is achieved by using only small source detector separations, typically from 0.1 to 2 mfp'. The lateral dimension of probing is limited to this range of distances.

Note that the present invention can be complemented by large source-detector separation measurements, if the optical properties of both superficial and deep parts of a turbid medium must be determined.

A model of photon migration in tissue was necessary to predict the relationship between the measured reflectance and the optical properties. Analytical solutions from the diffusion equation are not appropriate in our case because we are interested in the reflectance close to the source, at distances comparable to the transport mean free path [mfp']. We have performed Monte Carlo simulations to predict the measured reflectance of an homogeneous semi-infinite turbid media.

The exact diameter of the illuminating and collecting fibers, as well as their Numerical Apertures (N.A.), have been taken into account in the simulations. The mismatch of index of refraction at the surface of the medium have been also taken into account in the simulations, by using the Fresnel law for each photon reaching the surface.

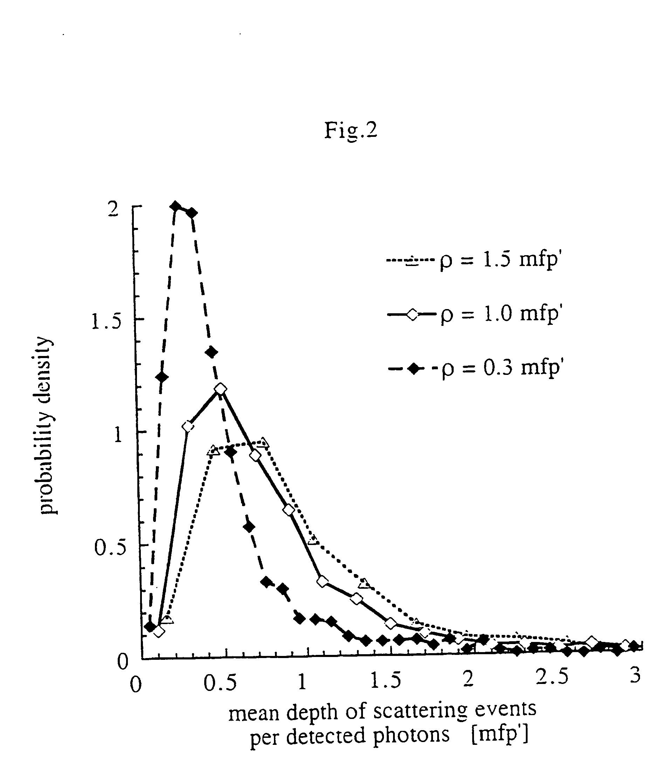

This is also one result of this simulation to compute the average depth of probing, illustrated in Fig.2.. It is demonstrated that only the superficial part of the turbid medium is probed if small source-detector separations are used. For this, we determined the depth below the surface of each scattering event in the simulation. With this information we determined the average depth of all the scattering events for each detected photon, which we present as a probability density function in Fig.2.. This figure shows that the average depth of scattering is approximately around 1 mfp'. Moreover it showed that the part located below 2 mfp' were not playing a significant role in the measured signal (for $\rho < 1.5$ mfp').

The spatially resolved reflectance $R(\rho)$, with short source-detector separations is more complex than in the case of large source-detector separations. Indeed, for small source detector-separation conditions, the inverse problem. i.e. calculating the localized absorption and reduced scattering coefficients, is sensitive to the scattering phase function. It is part of the present invention to have shown, from Monte Carlo simulations, that only the first and second moments of the phase function can be taken into account. Moreover, it was established that the influence of these two moments are not independent. Indeed, it is a merit of this invention to demonstrate that only one parameter $\gamma=(1-g_2)/(1-g_1)$, which depends on the first and second moments of the phase function can be used to characterize accurately the reflectance at short source-detector separation.

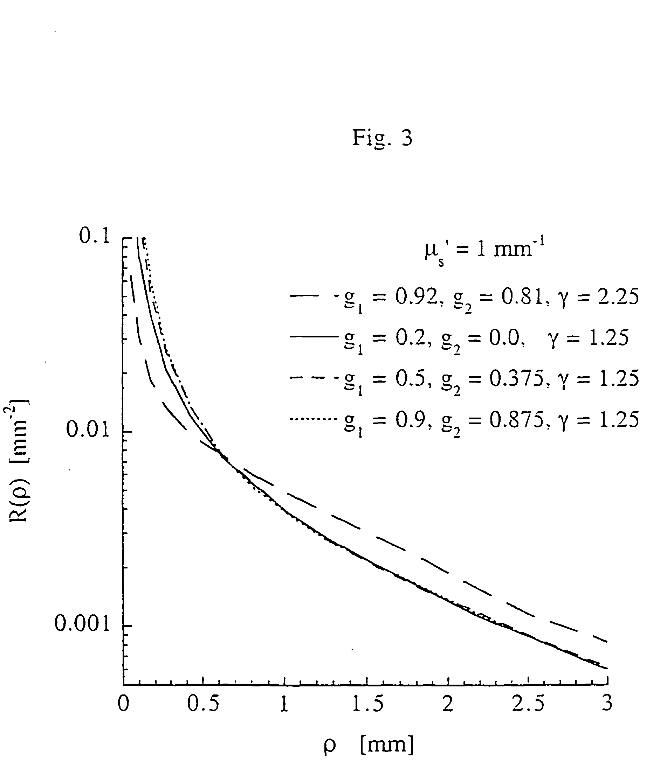

Fig.3 illustrates the fact that the parameter $\gamma$ is the only predominant parameter of the phase function that must be taken into account (and not $g=g_1$ as frequently mentioned in literature). Different reflectance curves, obtained from Monte Carlo simulations are shown in Fig.3. Four different phase functions were used for the simulations. Three phase functions are characterized by $\gamma=1.25$, but different $g_1$ and $g_2$ values. Fig.3. shows that almost identical reflectance curve are obtained for distances $\rho\mu_s'>0.3$, if the $g_1$ and $g_2$ are varied in such a way that the parameter $\gamma$ stays constant ($\gamma=1.25$). For comparison, the reflectance computed with a different $g$ ($=g_1$) value is also presented ($\gamma=2.25$). It appears then clearly that the parameter $g$ $(=g_1)$ plays a significant role in the reflectance.

The parameter $\gamma$ depends on the characteristics of the set of scatterers inside the turbid medium: shape, distribution of sizes and refractive index.

The possibility of determining this parameter $\gamma$ is an important part of this invention, and has never been reported earlier. The determination of $\gamma$ can be related to the microscopic structure of the sample, since y is related to the sizes and refractive indexes of the scatterers.

In most cases, the average refractive indices n and the source and detectors characteristics are fixed and known. In such case, only three parameters are determined from measurements at short source-detector separation: $\mu_a$, $\mu_s'$ and $\gamma$.

It is important to note that the parameter $\gamma$, cannot be estimated if large source detector separations are used. Indeed, the reflectance is only sensitive to $\gamma$ at short source-detector separation.

It was also derived from Monte Carlo simulations that the reflectance $R(\rho)$, for $\rho \approx 1$ mfp', can be reasonably well approximated by the expression:

$$R(\rho) \cong [A(\rho,\mu_s',\gamma) + B(\mu_a,\mu_s')]^2 \qquad (1.8)$$

In many cases, we found that Equ.(1.8) can also be written as:

$$R(\rho) \cong [A(\rho,\mu_s',\gamma) + \mu_s'B(\mu_a)]^2 \qquad (1.9)$$

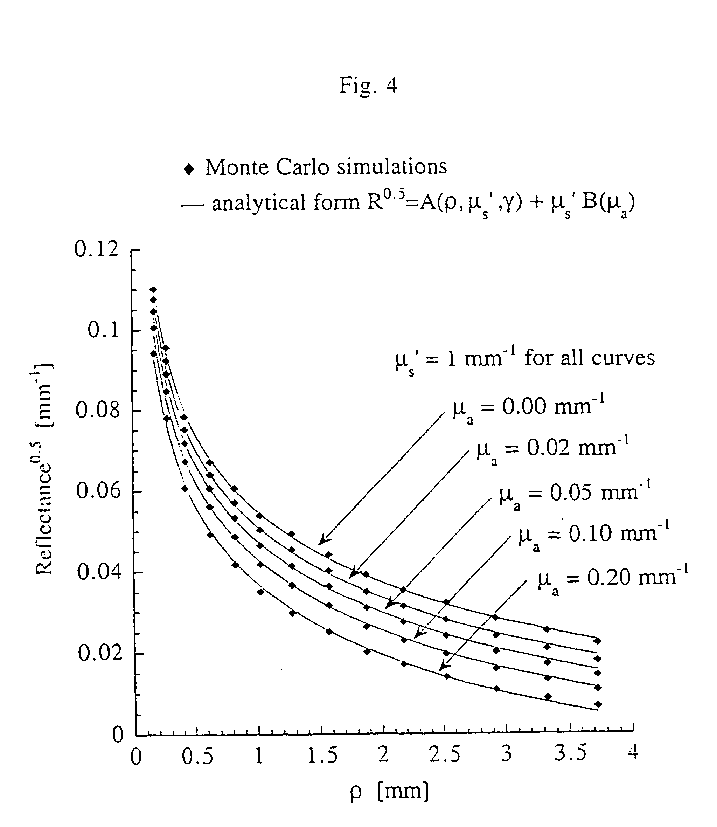

it is important for the description of the invention to evidence the fact that the function A depends on $\rho$, the scattering properties (i.e. $\mu_s'$ and $\gamma$) but not on $\mu_a$. In contrast, the function B depends on $\mu_a$ and $\mu_s'$ but neither on $\gamma$ nor $\rho$. An example of Equ. (1.9) is shown in Fig. 4.

This formulation is of great help to solve the inverse problem, as described in section 5.3.

3. Apparatus

The apparatus does not form part of the invention.

In the first embodiment, the apparatus can be divided in three parts, described in Fig.5.a.

The first part is the illuminating system. Any light source can be used. For examples: a) white sources, such as halogen or xenon lights, metal halides or fluorescent or phosphorescent sources. b) sources such as lasers, laser diodes, optical fiber lasers, light emitting diodes or superluminescent diodes. c) the sources described in point a) and b) where monochromators, filters or interference filters are added to select a given set of wavelengths.

In the first preferred embodiment, the light power is conducted to the investigated sample by the probe, which is the second part of the apparatus. The probe is preferably made of optical fibers, to illuminate and to collect the backscattered light. But GRIN rods or other type of light pipes can also be used. Different possible arrangements of optical fibers are illustrated in Fig.6 . Two different modes of measurements can be chosen. First, one fiber is used to illuminate the sample and at least two other fibers are used to collect the backscattered light at two different distances. Second, one fiber is used to collect the light and at least two other fibers, located at two different distances from the first one, are used to illuminate sequentially the sample.

The arrangement of the different fibers can be replaced by any imaging system or image guide, such as multicore optical fibers, or optical fiber bundle.

The light collected by the probe is analyzed by the detection unit, which is the third part of the apparatus. If wide spectral light sources are used (such as halogen or xenon lights), a spectrograph can be put between the probe and the detector to get wavelength dependence of the backscattered signal (either in the source or detection unit). Any types of detectors can be used. For example, photodiodes, avalanche photodiodes or photomultipliers can be assigned to each collecting fibers. Simultaneous detection of each collecting fiber can also be achieved using linear or two-dimensional detectors such as Charge-Coupled Detectors (1D or 2D), intensified CCD or array of photodiodes.

A particular embodiment is described in Fig.5.b. : the probe is composed of n detecting fibers (typically 6). A broadband or white light source is used for excitation and the retro-diffused light is collected by the n detecting fibers and dispersed in parallel in a spectrograph, before being detected by a 2D CCD camera and transmitted numerically to a PC for $\gamma$, $\mu_s'$, $\mu_a$ determination at each wavelength $\lambda$. This particular embodiment has the advantage of yielding the wavelength dependence of $\gamma$, $\mu_s'$, $\mu_a$ from a single measurement.

A second type of embodiment is presented on Fig. 5.c. The difference with embodiments presented in Fig. 5.a. and Fig. 5.b. is that optionally no optical fibers, light pipes or grin rods is used. The light source unit is directly in contact with the turbid medium, as well as the detector unit. Collimating optics, micro-optics or imaging optics (DOE Diffractive Optical Elements for example) can be put between the turbid medium and the actual light sources and detectors. The different type of sources and detectors cited in example for the first embodiment can be used for the second type of embodiments. Hybrid design, such as arrangements involving both direct contacts sensors or detectors and fibers, light pipes or grin rods are also included in the present embodiment.

The third embodiment is described in Fig.5.d. and Fig.5.e. The only difference with the first and second embodiment is that non-contact measurements are performed. A collimating system allows for a point-like illumination on the turbid medium. An imaging system enables the measurement of the spatial distribution of the reflectance. The detectors can be either an array (1D or 2D) of detectors (Fig.5.d) with optional scanning systems 1 and 2 which can operate separately or can be confounded in a single scanner, or a single detector (Fig.5.e). In this last case, a scanning device is used to obtain the spatially-resolved reflectance. A fiber bundle, multicore fiber or relay optics (grin rod or multiple lenses) can be put between the focal point of the imaging system and the detector(s). The different type of sources and detectors cited in example for the first embodiment can be used for the third embodiment.

Spatial images of the parameters $\mu_a$ $\mu_s'$ and $\gamma$ can be obtained by a series of measurements at different locations, that we call multi-site measurements. Some mechanical or optical scanning device can be used for this purpose. The resolution of such images is on the order of the mean source-detector separation used for a single site measurement. All three embodiments can be expanded to perform multi-site measurements, by duplicating and/or multiplexing the illuminating or measuring devices. For example, the optical fiber probes shown in Fig.6., can be duplicated and put side by side. The scanning system described in the third embodiment can also be expanded to perform multi-site measurements.

### 4. Normalization and calibration

The differences of transmission between each fiber are corrected by performing a measurement on a turbid phantom illuminated uniformly.

The background light, measured with the light source turned off, must be subtracted from the signal.

In order to perform absolute intensity measurements, a calibration is performed on a turbid medium of known optical properties. Examples of such a medium are: 1) solid or liquid turbid medium which properties have been measured by other techniques, or reported in the literature, 2) water suspension of microsphere of known size distribution and refractive index. Absorbing dye may be added to the suspension. In case 2) the scattering properties are calculated from Mie theory, and the absorption coefficient is assumed to be equal to the water absorption coefficient, if no absorbing dye is added. If an absorbing dye is used, the absorption coefficient can be measured by a spectrophotometer, before mixing the solution with any scattering materials.

A Monte Carlo simulation is performed with the optical properties of the calibration sample. The simulation is then divided by the experimental reflectance performed on the calibration sample. The result, that must be independent of the source-detector separation, is defined as the calibration factor. Each new measurement is multiplied by the calibration factor.

An example of a measurement, after calibration, is shown in Fig.7. The measurement was performed with the apparatus described in the first embodiment, with a probe similar to the one described in Fig.6.a. A prior calibration was performed on a solid turbid medium, which optical properties were measured by another technique (frequency domain measurement, cf. Ref 1.). The sample was a water suspension of polystyrene microsphere of 1 $\mu$m diameter. The measurement is compared to a Monte Carlo simulation performed with the scattering properties calculated from Mie theory and absorption coefficient of water. Fig. 7 shows an excellent agreement between the measurement and the simulation, which confirm the validity of our simulation model, experimental measurement and calibration.

### 5. Signal processing

#### 5.1. Control of the homogeneity of the area probed

Artifacts during a measurement, for example due to bad contact between the probe and the sample, or heterogeneity of the sample, can be detected by the following optional procedure. Two illuminating fibers are disposed symmetrically in regard to the collecting fibers (see Fig.6.b). If the sample is homogeneous, the reflectance curve should be identical with either illuminating fiber. Therefore, heterogeneity of the investigated region or obstructions beneath the fibers are detected by comparing the two curves. If the two curves are sufficiently close, the measurement is validated and the average of the two curves is calculated.

5.2. Smoothing procedure and computation of the derivative of the curve.

Functions in the form $m_1 \rho^{m2} \exp(m_3\rho)$ were always found to fit well Monte Carlo simulations for a restricted range of distances. Therefore, a smoothing of the experimental reflectance $R(\rho)$ can be processed by fitting $R(\rho)$ to $m_1 \rho^{m2} \exp(m_3\rho)$.

The determination of the slope of the logarithm $\frac{\partial}{\partial\rho}(\ln R (\rho,\mu_s',\alpha',\gamma))$ is also derived from this fit, using the following formula:

$$\frac{\partial}{\partial\rho}(\ln R(\rho,\mu_s',\alpha',\gamma))=\frac{m_2}{\rho}+m_3 \tag{1.10}$$

The slope of the square root of $R(\rho)$ can also be derived (the use of these slopes are described below in section 5.3 ):

$$\frac{\partial}{\partial\rho}\sqrt{R\left(\rho,\mu_s',\mu_a,\gamma\right)} = \frac{1}{2}\left(\frac{m_2}{\rho}+m_3\right)\left(\sqrt{m_1}\rho^{\frac{m_2}{2}}\exp\left(\frac{m_3\rho}{2}\right)\right) \tag{1.11}$$

5.3. Inverse problem

The so-called "direct problem" consists in computing the spatially resolved reflectance $R(\rho)$ from the values of the optical coefficients $n, \mu_a, \mu_s', \gamma$ involved in a model of propagation of the light in turbid medium and whereby the said "model" incorporates a Legendre polynomial development to the second order of the said "phase function", and whereby the said "phase parameter" $\gamma$ is introduced in the computation as an independent parameter. The so-called "inverse problem" consists in extracting the optical coefficients $n, \mu_a, \mu_s', \gamma$ from the spatially resolved reflectance data $R(\rho)$.

We developed different methods to solve the inverse problem, which consists in extracting optical coefficients from the reflectance data.

Method 1.

Monte Carlo simulations show that the measurements of the reflectance intensity $R(\rho)$ and the slope of ln$R$ $(\rho)$ (denoted $\partial \rho \, lnR$), determined at a fixed distance $\rho$, can be used to derive $\mu_s'$ and $\mu_a$ for a given $\gamma$ value. Fig. 8. shows graphically the relationship between $\mu_s'$ and $\mu_a$ and the two parameters $R(\rho = 1 \, mm)$ and $|\partial \rho \, lnR(\rho =1 \, mm)|$ in the case of $\rho$ =1 mm, $\gamma$ = 1.5 and 1.9. Note that any other choice of $\rho$ is possible, as long as $\rho$ is on the order of 1 mfp'. We see in Fig.8. that $\mu_s'$ and $\mu_a$ can not be determined uniquely if $\gamma$ is unknown. Further insight for optimizing the inversion strategy is provided by three additional features of Fig.8.

First, the determination of $\mu_s'$ is only weakly influenced by $\gamma$. Indeed in Fig.8. the errors induced by error in $\gamma$ are typically 10% for $\mu_s'$ around 1 mm$^{-1}$. Second, although absolute determination of $\mu_a$ is not possible when $\gamma$ is not precisely known, relative absorption changes can be still evaluated. Third, the indetermination of the parameter $\gamma$ may be resolved by the values of $R(\rho)$ and/or $|\partial \rho lnR(\rho)|$ at other distances. Therefore the following procedure can be used:

(1) determination of $\mu_s'$ and $\mu_a$ from $R(\rho = 1 \, mm)$ and$| \partial \rho \, lnR(\rho = 1 \, mm)|$ for a set of values $\gamma$. For example: $\gamma$ =1.0, 1.1, 1.2,...,2.5.
(2) simulations with the different sets of $\mu_s'$ and $\mu_a$ obtained from point 1)
(3) comparison between the simulations and the reflectance profile for distances 0.3<$\rho$ <2 mm.

This last step allows us to determine the correct values of $\gamma$, $\mu_s'$ and $\mu_a$. Points 1 to 3 can be done iteratively to evaluate $\gamma$ more precisely, using a finer discrimination of $\gamma$ values. This method described by the iteration of points 1) to 3) corresponds to finding a simulation that fit closely a measured curve $R(\rho)$. This can also be achieved by directly comparing the measured curve $R(\rho)$, with a set of simulations, and finding the simulation that minimize the square of the differences between the measured and simulated curves.

Note also that the use of the reflectance intensity $R(\rho)$ and the slope of $InR(\rho)$ is equivalent to the use of two intensities $R(\rho_1)$ and $R(\rho_2)$, measured at two close distances $\rho_1$ and $\rho_2$, respectively.

Method 2.

The inverse problem can also be performed, considering properties of $R(\rho)$ expressed by Equ.(1.8).

Indeed, it can be derived from Equ.(1.9) that the quantity $\frac{\partial}{\partial\rho}\sqrt{R}(\rho, \mu'_s, \mu_a, \gamma)$ does not depend on the absorption coefficient $\mu_a$:

$$\frac{\partial}{\partial\rho}\sqrt{R(\rho,\mu'_s,\mu_a,\gamma)}=\frac{\partial A}{\partial\rho}(\rho,\mu'_s,\gamma) \tag{1.12}$$

This property is confirmed in Fig.9 , where the quantity $\frac{\partial}{\partial\rho}\sqrt{R}(\rho,\mu'_s,\mu_a,\gamma)$, evaluated at $\rho$ =1 mm, is plotted as a function of $\mu_s$', for $\gamma$ =1, 1.9 and 2.5 and reduced albedo $\alpha'$=1, 0.95 and 0.9 (note that any other choice of $\rho$ is possible, as long as $\rho$ is of the order of 1 mfp').

In Fig.9. , the parameter $\frac{\partial}{\partial\rho}\sqrt{R}(\rho,\mu'_s,\mu_a,\gamma)$ clearly depends on $\mu_s$' and $\gamma$. In contrast, the dependence on $a$' is almost negligible.

Therefore, $\gamma$ and $\mu_s$' can be derived from the parameter $\frac{\partial}{\partial\rho}\sqrt{R}(\rho,\mu'_s, \mu_a,\gamma)$, calculated from the experimental reflectance $R(\rho)$ (see section 5.2). Simultaneous determination of $\gamma$ and $\mu_s$' require values of $\frac{\partial}{\partial\rho}\sqrt{R}(\rho,\mu'_s, \mu_a,\gamma)$ at different distances $\rho$ (at least two). If one of the parameters $\gamma$ or $\mu_s$' is already known, the determination of the other one can be obtained from the value of $\frac{\partial}{\partial\rho}\sqrt{R}(\rho,\mu'_s,\mu_a,\gamma)$ at a single distance.

Convenient analytical approximation of $\frac{\partial}{\partial\rho}(\rho,\mu'_s,\mu_a,\gamma)$ can be obtained by fitting Monte Carlo results to polynomial functions. For example, in the case of fixed $\gamma$ =1.9, we obtained:

$$\mu_s'=0.9162-52.89x+1795x^2-18155x^3+65428x^4 \tag{1.13}$$

where $x = \frac{1}{2}\frac{\partial}{\partial\rho}\sqrt{R}(\rho,\mu_s',\mu_a,\gamma)$ at $\rho$=1 mm. x is expressed in [mm$^{-2}$] and $\mu_s$'. is expressed in [mm$^{-1}$].

This results is valid for a probe of refractive index of 1.5 and a sample of refractive index of 1.4, optical fibers of diameter 200 µm, NA=0.37 (source and collection).

Once $\mu_s$' and $\gamma$ are calculated from the procedure explained above, $\mu_a$ is calculated from the absolute value of $R(\rho)$, which highly depends on $\mu_a$. For given $\mu_s$', $\gamma$ and $\rho$ values, the dependence of reflectance on $\mu_a$ is obtained by Monte Carlo results. From Equ.(1.8) we have:

$$\mu_a = h[\sqrt{R(\rho,\mu'_s,\mu_a,\gamma)}-f(\gamma,\mu_s')] \tag{1.14}$$

where $f$ and $h$ are functions given by Monte Carlo simulation. Particularly, they can be well approximated by polynomial functions. For example, for $\gamma$=1.9, probe refractive index of 1.5, sample refractive index of 1.4, optical fibers of diameter 200 µm, NA=0.37 (source and collection):

$$h = -0.002257 - 8.171\ y + 268.8\ y^2 \tag{1.15}$$

$$f = 0.01311+0.05184\ \mu_s'-0.01974\ \mu_s'^2+$$

$$0.003217\ \mu_s'^3-0.0001992\ \mu_s'^4 \tag{1.16}$$

where $y = [\sqrt{R}(\rho, \mu_s', \mu_a, \gamma) - f][$mm$^{-1}]$. $\mu_a$ is expressed in [mm$^{-1}$].

Method 3

Equ.(1,8) also shows that relative measurements of $\mu_a$, i.e. variation of $\mu_a$ from a known value $\mu_{ao}$, is possible by measuring the variation of the parameter $\sqrt{R}(\rho,\mu_s',\mu_a,\gamma)$ :

$$\sqrt{R(\rho,\mu_s{}',\mu_{a0},\gamma)} - \sqrt{R(\rho,\mu_s{}',\mu_a,\gamma)} = B(\mu_{a0},\mu_s{}') - B(\mu_a,\mu_s{}') \qquad (1.17)$$

This relation is illustrated in Fig.10. in the case of $\mu_{ao}$=0, $\rho$=1 mm, $\gamma$=1.0, 1.9 and 2.5, and for $a'$ = 1 to 0.83. confirms that the influence of $\gamma$ is weak in the quantity $\sqrt{R(\rho,\mu_s{}',\mu_{a0},\gamma)} - \sqrt{R(\rho,\mu_s{}',\mu_a,\gamma)}$. For known $\mu_s{}'$, the function $B(a')$ allows for the determination of a relative absorption change $\Delta\mu_a=\mu_a-\mu_{ao}$. Fig.10. illustrates the case $\mu_{ao}$ =0, but any other value of $\mu_{ao}$ is possible. The interesting point is that $B(a')$ does not depend on the phase function.

## Claims

1. A method for local and superficial characterization, on a probed volume and measuring area with dimensions on the order of one transport mean free path, of a turbid medium using the following parameters:

   a) the refractive index n of the turbid medium
   b) the absorption coefficient $\mu_a$ of the turbid medium.
   c) the reduced scattering coefficient $\mu_s{}'$ of the turbid medium.
   d) the phase function parameter $\gamma=(1-g_2)/(1-g_1)$ of the turbid media, where $g_1$ and $g_2$ are the first two moments of the Legendre polynomial development of the phase function $p(\theta)$, said function $p(\theta)$ representing the density probability for the scattering angle $\theta$,

   and comprising the steps of:

   - measuring the spatially-resolved reflectance $R(\rho)$of the turbid medium, $\rho$ being the source-detector distance, by any mean, comprising an illumination beam as a source and an optical detector, which allows for the determination of the said spatially-resolved reflectance $R(\rho)$,
   - mathematically processing $R(\rho)$ to compute at least said parameters $\mu_a$ , $\mu_s{}'$, $\gamma$.

2. The method of claim 1, wherein said spatially resolved reflectance is measured by a probe comprising at least one optical fiber carrying the light from the source unit to the turbid medium and at least one optical fiber collecting the reflected light and carrying it to detection unit, whereby the combination of a variety of emitting fibers and of receiving fibers yields a set of distances $\rho$ at which the reflectance $R(\rho)$ is measured.

3. The method according to any one of claims 1 and 2, wherein said spatially resolved reflectance $R(\rho)$ is measured for a set of values of $\rho$, by using a probe composed of optical fibers in any of the following configurations:

   - one emitting optical fiber and a set of optical receiving fibers
   - a set of optical emitting fibers and one optical receiving fiber
   - a set of optical emitting fibers and a set of optical receiving fibers
   - giving the spatially resolved reflectance $R(\rho)$ at a variety of source - detector distance $\rho$, the emitting and receiving fibers being arranged in a variety of configurations such as a line, crossed lines, a circle, a disc or an ellipse.

4. The method according to any one of claims 1, 2 and 3, wherein said spatially resolved reflectance is measured by an optical and electronic micro-system comprising an illuminating source and 1D or 2D arrays of optical detectors, arranged in a way similar to the one described in claim 3, and which, in some embodiment, can be a CCD or an array of photodiodes.

5. The method according to any one of claims 3 or 4 wherein the probe or the electronic micro-system is brought into contact with the turbid medium.

6. The method of claim 1 wherein said spatially resolved reflectance is measured by anyone of the following non-contact devices :

   - a first fixed optical system to irradiate the turbid medium with a collimated or focused beam forming the illuminating source and a second fixed optical system comprising an imaging system forming the image of the measured area of the turbid medium on an optical detector unit which is formed of 1D or 2D array of optical detectors, said array of optical detectors comprising one of the following systems :

- a set of optical fibers arranged in a variety of configurations similar to those described in claim 3,
- an optical and electronic micro-system (MOEM), preferably a CCD or MOS camera, with a functionality similar to the one described in claim 4,

- a fixed optical system for the collimated beam illuminating source and a scanned optical system acting as optical detector,
- a scanning optical system for the collimated beam illuminating source and a fixed optical system acting as optical detector,
- a scanning optical system for the collimated or focused beam used as an illuminating source and a scanning optical system acting as optical detector.

**7.** The method according to any one of claims 1 to 6, wherein the absorption coefficient $\mu_a$, the reduced scattering coefficient $\mu_s'$ and the phase function parameter $\gamma$ are determined by fitting the measured spatially-resolved reflectance $R(\rho, \mu_s', \mu_a, \gamma)$ to a set of discretized data obtained by using Monte Carlo simulations, or to interpolating functions giving a continuous approximation of the discretized data obtained by Monte Carlo simulations, and whereby said Monte Carlo simulations are based on a photon propagation model comprising a phase function approximated by a Legendre polynomial development limited to the second order. In a preferred embodiment, cubic splines are used as interpolating functions.

**8.** The method according to any one of claims 1 to 7 consisting of :

- fitting the measured reflectance $R(\rho)$ by the function:

$$m_1 \rho^{m_2} \exp(m_3 \rho)$$

this fit giving the values of the parameters $m_1$, $m_2$ and $m_3$ , assuming that the expression $R(\rho)=m_1\rho^{m_2}\exp(m_3\rho)$ gives a smoothed expression of the spatially resolved reflectance $R(\rho)$.
- Computing the slopes $\frac{\partial}{\partial\rho}\sqrt{R}(\rho)$ and $\frac{\partial}{\partial\rho}(\ln R(\rho))$, or any mathematical combinations of these two latter quantities and $R(\rho)$, from analytical functions using the parameters $m_1$, $m_2$ $m_3$, or by numerical procedures from the expression

$$R(\rho) = m_1 \rho^{m_2} \exp(m_3 \rho)$$

- computing the values of said parameters $\mu_a$, $\mu_s'$, $\gamma$ and/or the variations, in time and/or space, of at least one of said parameters $\Delta\mu_a$, $\Delta\mu_s'$, $\Delta\gamma$ from the relationship between the reflectance intensity $R(\rho)$ and the slope of $\ln R(\rho)$, denoted $\partial \rho \ln R$, determined at a fixed distance $\rho$ comparable to the transport mean free path, whereby the computation is made from the data obtained by Monte Carlo simulations, provided that said Monte Carlo simulations are based on a photon propagation model comprising a phase function approximated by a Legendre polynomial development limited to the second order.

**9.** The method according to any one of claims 1 to 7 consisting of :

- computing the reduced scattering coefficient $\mu_s'$ and the phase function parameter $\gamma$ by using the following form of the reflectance:

$$R(\rho) = (A(\rho,\gamma,\mu_s')+B(\mu_a,\mu_s'))^2$$

and comprising the steps of :

- Computing the slopes of the square root of the spatially resolved reflectance,

$$\frac{\partial}{\partial\rho}\sqrt{R(\rho,\mu_s',\mu_a,\gamma)} = \frac{\partial A}{\partial\rho}(\rho,\mu_s',\gamma)$$

- Determining the parameters $\mu_s'$ and $\gamma$ by a polynomial interpolation of the data obtained by Monte Carlo simulations, whereby said Monte Carlo simulations are based on a photon propagation model comprising a phase function approximated by a Legendre polynomial development limited to the second order.

**10.** The method of claim 9, wherein the absorption coefficient $\mu_\alpha$ is determined by using the equation:

$$\mu_\alpha = h[\sqrt{R(\rho,\mu_s',\mu_a,\gamma)} - f(\gamma,\mu_s')]$$

where $f$ and $h$ are continuous functions of the parameters $\rho$, $\mu_s'$ and $\gamma$ that can be approximated by a polynomial interpolation of the data obtained by Monte Carlo simulations, whereby said "Monte Carlo simulations" are based on a photon propagation model comprising a phase function approximated by a Legendre polynomial development limited to the second order.

**11.** The method according to any one of claims 1 to 7, wherein the difference $\Delta\mu_a = \mu_a - \mu_{ao}$ between the absorption coefficient $\mu_a$ and a known value $\mu_{ao}$ is computed from the quantity $\sqrt{R}(\rho,\mu_s',\mu_a,\gamma) - \sqrt{R}(\rho,\mu_s',\mu_{a0},\gamma) = B(a') - B(a_0')$, whereby the function $B(a')$ of the albedo $a'$ can be approximated by a polynomial interpolation of the data obtained by Monte Carlo simulations, whereby said Monte Carlo simulations are based on a photon propagation model comprising a phase function approximated by a Legendre polynomial development limited to the second order, and whereby the calculation can be done for a single $\gamma$ value, because the influence of the phase function parameter and $\gamma$ in $B(a')$ are particularly weak.

**12.** The method according to any one of claims 1 to 11, wherein the illuminating source is a broadband source or a white light source and the detector unit comprises a spectrograph or any wavelength analysis system to measure the wavelength dependence of at least said parameters $\mu_a, \mu_s', \gamma$.

**13.** The method according to any one of claims 1 to 12, wherein said turbid medium is a biological medium.

**14.** The method according to any one of claims 1 to 13, wherein the measurement and processing is repeated at different location of the sample, to build images of any one of the said parameters $n$, $\mu_a$, $\mu_s'$, $\gamma$.

**Patentansprüche**

**1.** Verfahren zur lokalen und oberflächlichen Charakterisierung eines trüben Mediums an einem untersuchten Volumen und Meßbereich mit Abmessungen in der Größenordnung eines mittleren freien Transportwegs unter Verwendung der folgenden Parameter:

a) der Brechungsindex n des trüben Mediums
b) der Absorptionskoeffizient $\mu_a$ des trüben Mediums
c) der reduzierte Streukoeffizient $\mu_s'$ des trüben Mediums
d) der Phasenfunktionsparameter $\gamma = (1-g_2)/(1-g_1)$ der trüben Medien, wobei $g_1$ und $g_2$ die ersten zwei Momente der Legendre-Polynomentwicklung der Phasenfunktion $p(\theta)$ sind, wobei die Funktion $p(\theta)$ die Dichtewahrscheinlichkeit für den Streuwinkel $\theta$ darstellt,

und mit den folgenden Schritten:

- Messen des räumlich aufgelösten Reflexionsgrads $R(\rho)$ des trüben Mediums, wobei $\rho$ der Quelle-Detektor-Abstand ist, über ein beliebiges Mittel, umfassend einen Beleuchtungsstrahl als Quelle und einen optischen Detektor, was die Bestimmung des räumlich aufgelösten Reflexionsgrads $R(\rho)$ gestattet,
- mathematisches Verarbeiten von $R(\rho)$, um mindestens die Parameter $\mu_a$, $\mu_s'$, $\gamma$ zu berechnen.

**2.** Verfahren nach Anspruch 1, wobei der räumlich aufgelöste Reflexionsgrad von einer Sonde gemessen wird, die mindestens eine optische Faser, die das Licht von der Quelleneinheit zum trüben Medium führt, und mindestens eine optische Faser, die das reflektierte Licht sammelt und es zur Detektionseinheit führt, umfaßt, wodurch die Kombination aus einer Vielfalt emittierender Fasern und Empfangen der Fasern eine Menge von Abständen $\rho$ liefert, bei denen der Reflexionsgrad $R(\rho)$ gemessen wird.

**3.** Verfahren nach einem der Ansprüche 1 und 2, wobei der räumlich aufgelöste Reflexionsgrad $R(\rho)$ für eine Menge von Werten von $\rho$ gemessen wird, indem eine Sonde verwendet wird, die aus optischen Fasern in einer beliebigen der folgenden Konfigurationen besteht:

- eine emittierende optische Faser und eine Menge optisch empfangender Fasern
- eine Menge optisch emittierender Fasern und eine Menge optisch empfangender Fasern
- eine Menge optisch emittierender Fasern und eine Menge optisch empfangender Fasern
- Angeben des räumlich aufgelösten Reflexionsgrads $R(\rho)$ bei einer Vielfalt von Quelle-Detektor-Abständen $\rho$, wobei die emittierenden und empfangenden Fasern in einer Vielfalt von Konfigurationen wie etwa einer Linie, gekreuzter Linien, einem Kreis, einer Scheibe oder einer Ellipse angeordnet sind.

**4.** Verfahren nach einem der Ansprüche 1, 2 und 3, wobei der räumlich aufgelöste Reflexionsgrad durch ein optisches und elektronisches Mikrosystem gemessen wird, das eine beleuchtende Quelle und 1D- oder 2D-Arrays optischer Detektoren umfaßt, die auf eine Weise ähnlich der in Anspruch 3 beschrieben angeordnet sind und die bei einer gewissen Ausführungsform eine CCD oder ein Array von Fotodioden sein können.

**5.** Verfahren nach einem der Ansprüche 3 oder 4, wobei die Sonde oder das elektronische Mikrosystem in Kontakt mit dem trüben Medium gebracht wird.

**6.** Verfahren nach Anspruch 1, wobei der räumlich aufgelöste Reflexionsgrad durch eine beliebige der folgenden nichtkontaktierenden Einrichtungen gemessen wird:

- ein erstes festes optisches System zum Bestrahlen des trüben Mediums mit einem kollimierten oder fokussierten Strahl, der die beleuchtende Quelle bildet, und ein zweites festes optisches System, das ein Abbildungssystem umfaßt, das das Bild des gemessenen Bereichs des trüben Mediums auf einer optischen Detektoreinheit ausbildet, die aus einem 1D- oder 2D-Array optischer Detektoren gebildet wird, wobei das Array optischer Detektoren eines der folgenden Systeme umfaßt:

  • eine Menge optischer Fasern, angeordnet in einer Vielfalt von Konfigurationen ähnlich den in Anspruch 3 beschriebenen,
  • ein optisches und elektronisches Mikrosystem (MOEM) bevorzugt eine CCD- oder MOS-Kamera, mit einer Funktionalität ähnlich der in Anspruch 4 beschriebenen,

- ein festes optisches System für die kollimierte-Strahl-beleuchtende Quelle und ein abgetastetes optisches System, wirkend als optischer Detektor,
- ein abtastendes optisches System für die kollimierte-Strahl-beleuchtende Quelle und ein festes optisches System, wirkend als optischer Detektor,
- ein abtastendes optisches System für den kollimierten oder fokussierten Strahl, verwendet als beleuchtende Quelle, und ein abtastendes optisches System, wirkend als optischer Detektor.

**7.** Verfahren nach einem der Ansprüche 1 bis 6, wobei der Absorptionskoeffizient $\mu_a$, der reduzierte Streukoeffizient $\mu_s'$ und der Phasenfunktionsparameter $\gamma$ bestimmt werden durch Anpassen des gemessenen, räumlich aufgelösten Reflexionsgrads $R(\rho, \mu_s' \mu_a, \gamma)$ an eine Menge von durch Monte-Carlo-Simulationen erhaltenen diskretisierten Daten oder an interpolierende Funktionen, was eine kontinuierliche Approximation der durch Monte-Carlo-Simulationen erhaltenen diskretisierten Daten ergibt, und wodurch die Monte-Carlo-Simulationen auf einem Photonenausbreitungsmodell basieren, umfassend eine Phasenfunktion, approximiert durch eine Legendre-Polynomentwicklung, begrenzt auf die zweite Ordnung. Bei einer bevorzugten Ausführungsform werden kubische Splines als interpolierende Funktionen verwendet.

**8.** Verfahren nach einem der Ansprüche 1 bis 7, das besteht aus:

- Anpassen des gemessenen Reflexionsgrads $R(\rho)$ durch die Funktion:

$$m_1\rho^{m_1} \exp(m_3\rho)$$

wobei diese Anpassung die Werte der Parameter $m_1$, $m_2$, und $m_3$ unter der Annahme liefert, daß der Ausdruck $R(\rho) = m_1\rho^{m_1} \exp(m_3\rho)$ einen geglätteten Ausdruck des räumlich aufgelösten Reflexionsgrads $R(\rho)$ liefert,

- Berechnen der Steigungen $\frac{\partial}{\partial \rho}\sqrt{R}(\rho)$ und $\frac{\partial}{\partial \rho}(\ln R(\rho))$ oder beliebiger mathematischer Kombinationen dieser beiden letzteren Größen und $R(\rho)$ aus analytischen Funktionen unter Verwendung der Parameter $m_1$, $m_2$, $m_3$ oder durch numerische Prozeduren aus dem Ausdruck $R(\rho) = m_1\rho^{m2} \exp(m_3\rho)$

- Berechnen der Werte der Parameter $\mu_a$, $\mu_s'$, $\gamma$ und/oder der zeitlichen und/oder räumlichen Variationen mindestens eines der Parameter $\Delta\mu_a$, $\Delta\mu_s'$, $\Delta\gamma$ anhand der Beziehung zwischen der Reflexionsgradintensität $R(\rho)$ und der Steigung von $\ln R(\rho)$, bezeichnet als $\partial \rho \ln R$, bestimmt in einem festen Abstand $\rho$, vergleichbar zu dem mittleren freien Transportweg, wodurch die Berechnung erfolgt anhand der durch Monte-Carlo-Simulationen erhaltenen Daten, vorausgesetzt, die Monte-Carlo-Simulationen basieren auf einem Photonenausbreitungsmodell, umfassend eine Phasenfunktion approximiert durch eine Legendre-Polynomentwicklung, begrenzt auf die zweite Ordnung.

9. Verfahren nach einem der Ansprüche 1 bis 7, bestehend aus:

- Berechnen des reduzierten Streukoeffizienten $\mu_s'$ und des Phasenfunktionsparameters $\gamma$ durch Verwendung der folgenden Form des Reflexionsgrads:

$$R(\rho) = (A(\rho,\gamma,\mu_s') + B(\mu_{a,\ s}'))^2$$

und umfassend die folgenden Schritte:

- Berechnen der Steigungen der Quadratwurzel des räumlich aufgelösten Reflexionsgrads

$$\frac{\partial}{\partial \rho}\sqrt{R(\rho,\mu_s',\mu_a,\gamma)} = \frac{\partial A}{\partial \rho}(\rho,\mu_s',\gamma)$$

- Bestimmen der Parameter $\mu_s'$ und $\gamma$ durch eine Polynominterpolation der durch Monte-Carlo-Simulationen erhaltenen Daten, wodurch die Monte-Carlo-Simulationen auf einem Photonenausbreitungsmodell basieren, umfassend eine Phasenfunktion, approximiert durch eine Legendre-Polynomentwicklung, begrenzt auf die zweite Ordnung.

10. Verfahren nach Anspruch 9, wobei der Absorptionskoeffizient $\mu_a$ bestimmt wird durch Verwendung der folgenden Gleichung:

$$\mu_a = h[\sqrt{R(\rho,\mu_s',\mu_a,\gamma)} - f(\gamma,\mu_s')]$$

wobei $f$ und $h$ stetige Funktionen der Parameter $\rho$, $\mu_s'$ und $\gamma$ sind, die durch eine Polynominterpolation der durch Monte-Carlo-Simulationen erhaltenen Daten approximiert werden können, wobei die "Monte-Carlo-Simulationen" auf einem Photonenausbreitungsmodell basieren, umfassend eine Phasenfunktion, approximiert durch eine Legendre-Polynomentwicklung, begrenzt auf die zweite Ordnung.

11. Verfahren nach einem der Ansprüche 1 bis 7, wobei die Differenz $\Delta\mu_a = \mu_a-\mu_{a0}$ zwischen dem Absorptionskoeffizienten $\mu_a$ und einem bekannten Wert $\mu_{ao}$ berechnet wird aus der Größe $\sqrt{R}(\rho,\mu_s',\mu_a,\gamma) - \sqrt{R}(\rho,\mu_s',\mu_{a0},\gamma) = B(a')-B(a_0')$, wobei die Funktion $B(a')$ der Albedo a' approximiert werden kann durch eine Polynominterpolation der durch Monte-Carlo-Simulationen erhaltenen Daten, wobei die Monte-Carlo-Simulationen auf einem Photonenausbreitungsmodell basieren, umfassend eine Phasenfunktion, approximiert durch eine Legendre-Polynomentwicklung, begrenzt auf die zweite Ordnung, und wobei die Berechnung für einen einzelnen $\gamma$-Wert erfolgen kann, weil der Einfluß des Phasenfunktionsparameters und $\gamma$ in B(a') besonders schwach ist.

12. Verfahren nach einem der Ansprüche 1 bis 11, wobei die beleuchtende Quelle eine Breitbandquelle oder eine Weißlichtquelle ist und die Detektoreinheit einen Spektrographen oder ein beliebiges Wellenlängenanalysesystem zum Messen der Wellenlängenabhängigkeit mindestens der Parameter $\mu_a$, $\mu_s'$, $\gamma$ umfaßt.

13. Verfahren nach einem der Ansprüche 1 bis 12, wobei das trübe Medium ein biologisches Medium ist.

14. Verfahren nach einem der Ansprüche 1 bis 13, wobei die Messung und Verarbeitung an einer anderen Stelle der Probe wiederholt wird, um Bilder eines beliebigen einzelnen der Parameter n, $\mu_a$, $\mu_s'$, $\gamma$ aufzubauen.

**Revendications**

1. Procédé de caractérisation locale et superficielle, sur un volume sondé et une aire de mesure aux dimensions de l'ordre d'un libre parcours moyen de transport, d'un milieu trouble au moyen des paramètres suivants :

   a) l'indice de réfraction n du milieu trouble
   b) le coefficient d'absorption $\mu_a$ du milieu trouble
   c) le coefficient de diffusion réduit $\mu_s'$ du milieu trouble
   d) le paramètre de fonction de phase $\gamma = (1-g_2)/(1-g_1)$ du milieu trouble, où $g_1$ et $g_2$ sont les deux premiers moments du développement polynomial de Legendre de la fonction de phase $p(\theta)$, ladite fonction $p(\theta)$ représentant la probabilité de densité pour l'angle de diffusion $\theta$,

   et comprenant les étapes de :

   - mesure de la réflectance résolue spatialement $R(\rho)$ du milieu trouble, $\rho$ étant la distance source-détecteur, par n'importe quel moyen, comprenant un faisceau d'éclairage comme source et un détecteur optique, lequel permet la détermination de ladite réflectance résolue spatialement $R(\rho)$,
   - le traitement mathématique de $R(\rho)$ afin de calculer au moins lesdits paramètres $\mu_a$, $\mu_s'$, $\gamma$.

2. Procédé selon la revendication 1, dans lequel la réflectance résolue spatialement est mesurée par une sonde comprenant au moins une fibre optique acheminant la lumière depuis l'unité de source jusqu'au milieu trouble et au moins une fibre optique collectant la lumière réfléchie et l'acheminant jusqu'à l'unité de détection, par lequel la combinaison d'une variété de fibres émettrices et de fibres réceptrices produit un ensemble de distances $\rho$ auxquelles la réflectance $R(\rho)$ est mesurée.

3. Procédé selon l'une quelconque des revendications 1 et 2, dans lequel ladite réflectance résolue spatialement $R(\rho)$ est mesurée pour un ensemble de valeurs de $\rho$, en utilisant une sonde composée de fibres optiques dans n'importe laquelle des configurations suivantes :

   - une fibre optique émettrice et un ensemble de fibres réceptrices optiques
   - un ensemble de fibres émettrices optiques et une fibre réceptrice optique
   - un ensemble de fibres émettrices optiques et un ensemble de fibres réceptrices optiques
   - étant donné la réflectance résolue spatialement $R(\rho)$ à une variété de distances source-détecteur $\rho$, les fibres émettrices et réceptrices étant agencées en une variété de configurations telles qu'une ligne, des lignes croisées, un cercle, un disque ou une ellipse.

4. Procédé selon l'une quelconque des revendications 1, 2 et 3, dans lequel ladite réflectance résolue spatialement est mesurée par un microsystème optique et électronique comprenant une source d'éclairage et des matrices uni ou bidimensionnelles de détecteurs optiques, agencées d'une façon semblable à celle décrite à la revendication 3, et lequel, dans un certain mode de réalisation, peut être un CCD ou une matrice de photodiodes.

5. Procédé selon l'une quelconque des revendications 3 ou 4, dans lequel la sonde ou le microsystème électronique est mis en contact avec le milieu trouble.

6. Procédé selon la revendication 1, dans lequel ladite réflectance résolue spatialement est mesurée par l'un quelconque des dispositifs sans contact suivants :

   - un premier système optique fixe pour irradier le milieu trouble avec un faisceau collimaté ou focalisé formant la source d'éclairage et un deuxième système optique fixe comprenant un système d'imagerie formant l'image de l'aire mesurée du milieu trouble sur une unité de détecteur optique qui est formée d'une matrice uni ou bidimensionnelle de détecteurs optiques, ladite matrice de détecteurs optiques comprenant l'un des systèmes suivants :

     • un ensemble de fibres optiques agencées dans une variété de configurations semblables à celles décrites à la revendication 3,

- un microsystème optique et électronique (MOEM), de préférence une caméra CCD ou MOS, ayant une fonctionnalité semblable à celle décrite à la revendication 4,

- un système optique fixe pour la source d'éclairage à faisceau collimaté et un système optique balayé servant de détecteur optique,
- un système optique à balayage pour la source d'éclairage à faisceau collimaté et un système optique fixe servant de détecteur optique,
- un système optique à balayage pour le faisceau collimaté ou focalisé utilisé comme source d'éclairage et un système optique à balayage servant de détecteur optique.

7. Procédé selon l'une quelconque des revendications 1 à 6, dans lequel le coefficient d'absorption $\mu_a$, le coefficient de diffusion réduit $\mu_s'$ et le paramètre de fonction de phase $\gamma$ sont déterminés en ajustant la réflectance résolue spatialement mesurée $R(\rho, \mu_s', \mu_a, \gamma)$ à un ensemble de données discrétisées obtenues par simulations de Monte Carlo, ou à des fonctions d'interpolation donnant une approximation continue des données discrétisées obtenues par simulations de Monte Carlo, et par lequel lesdites simulations de Monte Carlo sont basées sur un modèle de propagation de photons comprenant une fonction de phase approximée par un développement polynomial de Legendre limité au deuxième ordre. Dans un mode de réalisation préféré, des splines cubiques sont utilisées comme fonctions d'interpolation.

8. Procédé selon l'une quelconque des revendications 1 à 7, consistant en :

- l'ajustement de la réflectance mesurée $R(\rho)$ par la fonction :

$$m_1 \rho^{m_2} \exp(m_3 \rho)$$

cet ajustement donnant les valeurs des paramètres $m_1$, $m_2$ et $m_3$, en supposant que l'expression $R(\rho)$ = $m_1 \rho^{m_2} \exp(m_3 \rho)$ donne une expression lissée de la réflectance résolue spatialement $R(\rho)$.
- le calcul des pentes $\frac{\partial}{\partial \rho}\sqrt{R}(\rho)$ et $\frac{\partial}{\partial \rho}(lnR(\rho))$, ou de toutes combinaisons mathématiques de ces deux dernières quantités et de $R(\rho)$, à partir de fonctions analytiques en utilisant les paramètres $m_1$, $m_2$, $m_3$, ou par des procédures numériques à partir de l'expression

$$R(\rho) = m_1 \rho^{m_2} \exp(m_3 \rho)$$

- le calcul des valeurs desdits paramètres $\mu_A$, $\mu_S'$, $\gamma$ et/ou des variations, dans le temps ou dans l'espace, d'au moins l'un desdits paramètres $\Delta\mu_A$, $\Delta\mu_S'$, $\Delta_\gamma$ à partir de la relation entre l'intensité de réflectance $R(\rho)$ et la pente de $lnR(\rho)$, désignée $\partial\rho lnR$, déterminée à une distance fixe $\rho$ comparable au libre parcours moyen de transport, par lequel le calcul est effectué à partir des données obtenues par simulations de Monte Carlo, à condition que lesdites simulations de Monte Carlo soient basées sur un modèle de propagation de photons comprenant une fonction de phase approximée par un développement polynomial de Legendre limité au deuxième ordre.

9. Procédé selon l'une quelconque des revendications 1 à 7, consistant en :

- le calcul du coefficient de diffusion réduit $\mu_s'$ et du paramètre de fonction de phase $\gamma$ en utilisant la forme suivante de la réflectance :

$$R(\rho) = (A(\rho, \gamma, \mu_s') + B(\mu_a, \mu_s'))^2$$

et comprenant les étapes de :

- calcul des pentes de la racine carrée de la réflectance résolue spatialement,

$$\frac{\partial}{\partial \rho}\sqrt{R(\rho, \mu_s', \mu_a, \gamma)} = \frac{\partial A}{\partial \rho}(\rho, \mu_s', \gamma)$$

- détermination des paramètres $\mu_s{}'$ et $\gamma$ par une interpolation polynomiale des données obtenues par simulations de Monte Carlo, par lequel lesdites simulations de Monte Carlo sont basées sur un modèle de propagation de photons comprenant une fonction de phase approximée par un développement polynomial de Legendre limité au deuxième ordre.

10. Procédé selon la revendication 9, dans lequel le coefficient d'absorption $\mu_a$ est déterminé en utilisant l'équation :

$$\mu_a = h[\sqrt{R(\rho,\mu_s{}',\mu_a,\lambda)} - f(\gamma,\mu_s{}')]$$

où $f$ et $h$ sont des fonctions continues des paramètres $\rho$, $\mu_s{}'$ et $\gamma$ qui peuvent être approximées par une interpolation polynomiale des données obtenues par simulations de Monte Carlo, par lequel lesdites "simulations de Monte Carlo" sont basées sur un modèle de propagation de Photons comprenant une fonction de phase approximée par un développement polynomial de Legendre limité au deuxième ordre.

11. Procédé selon l'une quelconque des revendications 1 à 7, dans lequel la différence $\Delta\mu_a = \mu_a - \mu_{ao}$ entre le coefficient d'absorption $\mu_a$ et une valeur connue $\mu_{ao}$ est calculée à partir de la quantité $\sqrt{R}(\rho,\mu_s{}',\mu_a,\gamma - \sqrt{R}(\rho,\mu_s{}',\mu_{ao},\gamma = B(a')-B(a_0')$, par lequel la fonction $B(a')$ de l'albédo $a'$ peut être approximée par une interpolation polynomiale des données obtenues par simulations de Monte Carlo, par lequel lesdites simulations de Monte Carlo sont basées sur un modèle de propagation de Photons comprenant une fonction de phase approximée par un développement polynomial de Legendre limité au deuxième ordre, et par lequel le calcul peut être effectué pour une seule valeur $\gamma$, car l'influence du paramètre de fonction de phase et de $\gamma$ dans $B(a')$ est particulièrement faible.

12. Procédé selon l'une quelconque des revendications 1 à 11, dans lequel la source d'éclairage est une source à large bande ou une source de lumière blanche et l'unité de détecteur comprend un spectrographe ou n'importe quel système d'analyse de longueur d'onde afin de mesurer la dépendance vis-à-vis de la longueur d'onde d'au moins lesdits paramètres $\mu_A$, $\mu_S{}'$, $\gamma$.

13. Procédé selon l'une quelconque des revendications 1 à 12, dans lequel ledit milieu trouble est un milieu biologique.

14. Procédé selon l'une quelconque des revendications 1 à 13, dans lequel la mesure et le traitement sont répétés à un endroit différent de l'échantillon, afin de construire des images de n'importe lequel desdits paramètres $n$, $\mu_A$, $\mu_S{}'$, $\gamma$.

Fig.1

Fig.2

mean depth of scattering events
per detected photons   [mfp']

Fig. 3

Fig. 4

♦ Monte Carlo simulations

— analytical form $R^{0.5} = A(\rho, \mu_s', \gamma) + \mu_s' B(\mu_a)$

$\mu_s' = 1$ mm$^{-1}$ for all curves

$\mu_a = 0.00$ mm$^{-1}$

$\mu_a = 0.02$ mm$^{-1}$

$\mu_a = 0.05$ mm$^{-1}$

$\mu_a = 0.10$ mm$^{-1}$

$\mu_a = 0.20$ mm$^{-1}$

Reflectance$^{0.5}$ [mm$^{-1}$]

$\rho$ [mm]

Fig. 5a

probe

source unit

reference

detection unit

turbid medium

signal processing

Fig. 5.b

Apparatus:

Details of the optical probe:

Fig. 5c

signal processing

source

turbid medium

detector
(1D or 2D array)

Fig. 5d

Fig. 5e

source unit

scanning
system 1

turbid medium

signal processing

detection unit

scanning
system 2

Fig.6a

detecting fibers
illuminating fibers
or
illuminating fibers
detecting fibers

Fig. 6b

detecting fibers
illuminating fibers

or
illuminating fibers
detecting fibers

Fig. 6c

detecting fibers
illuminating fibers
or
illuminating fibers
detecting fibers

Fig.6d

single core fiber
(detection or
illumination)

multicore fiber or
bundle of optical fibers
(detection or
illumination)

Fig. 6e

I: Illuminating fibers
C: detecting fibers
F: additional fibers

Fig. 7

Fig. 8

Fig. 9

Fig. 10